(19) Europäisches Patentamt
European Patent Office
Office européen des brevets

(11) EP 4 648 160 A1

(12) DEMANDE DE BREVET EUROPEEN

(43) Date de publication:
**12.11.2025 Bulletin 2025/46**

(21) Numéro de dépôt: **25173960.3**

(22) Date de dépôt: **02.05.2025**

(51) Classification Internationale des Brevets (IPC):
***H01M 10/0525*** *(2010.01)* ***H01M 10/0565*** *(2010.01)*

(52) Classification Coopérative des Brevets (CPC):
**H01M 10/0565; H01M 10/0525;** H01M 2300/0082

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **06.05.2024 FR 2404714**

(71) Demandeurs:
- **Commissariat à l'Energie Atomique et aux Energies Alternatives**
  **75015 Paris (FR)**
- **Centre National de la Recherche Scientifique**
  **75016 Paris (FR)**
- **Université Grenoble Alpes**
  **38400 Saint Martin d'Hères (FR)**

(72) Inventeurs:
- **FARINA, Chloé**
  **38054 Grenoble cedex 09 (FR)**
- **BERNARD, Laurent**
  **38054 Grenoble cedex 09 (FR)**
- **LANDA, Matthieu**
  **38054 Grenoble cedex 09 (FR)**
- **LECONTE, Nicolas**
  **38401 SAINT-MARTIN D'HERES (FR)**
- **PICARD, Lionel**
  **38054 Grenoble cedex 09 (FR)**

(74) Mandataire: **Santarelli**
**Tour Trinity**
**1 bis Esplanade de la Défense**
**92035 Paris La Défense Cedex (FR)**

(54) **ÉLECTROLYTE SOLIDE POUR BATTERIE AU LITHIUM**

(57) L'invention concerne un électrolyte solide de batterie au lithium, comprenant un polymère de la famille des poly(carbonate d'alkylène) et un sel de lithium de formule (III) :

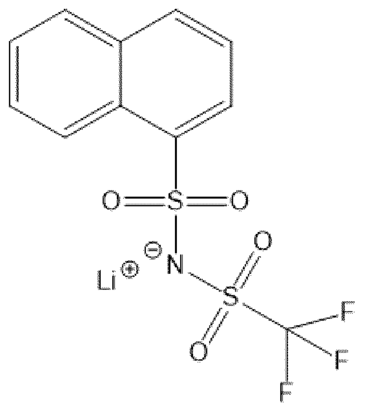

(III).

EP 4 648 160 A1

## Description

DOMAINE TECHNIQUE

La présente invention s'inscrit dans le domaine de la fabrication des batteries au lithium.

Plus particulièrement, la présente invention concerne un électrolyte comprenant un sel organique et un polymère de la famille des polycarbonates, particulièrement adapté à une mise en œuvre dans une batterie au lithium tout-solide. L'invention concerne également un procédé de préparation d'un tel électrolyte, ainsi que son utilisation dans une cellule électrochimique pour batterie au lithium tout-solide. D'autres objets de l'invention concernent une cellule électrochimique comprenant l'électrolyte selon l'invention, et une batterie au lithium comprenant une telle cellule électrochimique.

TECHNIQUE ANTERIEURE

Les batteries au lithium, telles que les batteries lithium-ion, sont de plus en plus utilisées comme source d'énergie autonome, en particulier dans les équipements électroniques portables (tels que les téléphones mobiles, les ordinateurs portables, l'outillage), où elles remplacent progressivement les batteries nickel-cadmium (NiCd) et nickel-hydrure métallique (NiMH), ou encore dans les véhicules électriques. Elles sont également très utilisées pour fournir l'alimentation en énergie nécessaire aux nouvelles micro-applications, telles que les cartes à puce, les capteurs ou autres systèmes électromécaniques.

D'un point de vue fonctionnel, les batteries lithium-ion fonctionnent sur le principe de l'intercalation-désintercalation d'ions métalliques au sein de matériaux constitutifs des électrodes des cellules électrochimiques de la batterie, ces matériaux pouvant être qualifiés de matériaux (électrochimiquement) actifs. Plus précisément, la réaction à l'origine de la production de courant (c'est-à-dire lorsque la batterie est en mode de décharge) met en jeu le transfert, par l'intermédiaire d'un électrolyte conducteur ionique, généralement compris dans un séparateur, de cations lithium provenant d'une électrode négative qui viennent s'intercaler dans le réseau accepteur (ou matériau actif) de l'électrode positive, tandis que des électrons issus de la réaction à l'électrode négative vont alimenter le circuit extérieur auquel sont reliées les électrodes positive et négative.

Les électrolytes conducteurs ioniques conventionnels mis en œuvre dans les batteries au lithium sont de type liquide, composés de solvants organiques dans lesquels sont dissouts des sels de lithium. De tels électrolytes liquides souffrent toutefois de problèmes de sécurité en raison de leur volatilité, leur inflammabilité et des potentiels risques de fuites.

L'une des stratégies pour pallier ces problèmes de sécurité est le remplacement des électrolytes liquides utilisés dans les batteries par des matériaux solides. Les accumulateurs / batteries mettant en œuvre des électrolytes solides (ou « SSEs » pour l'acronyme anglo-saxon « Solid-State Electrolyte ») sont couramment nommés « tout-solide ». Ce type de batteries permet d'atteindre des densités d'énergie supérieures aux technologies de batteries liquides, via l'utilisation d'électrodes négatives en lithium métallique, tout en assurant une sécurité accrue de la batterie en fonctionnement. L'électrolyte solide y joue en outre également le rôle de séparateur dans la batterie : il empêche les électrodes d'entrer en contact physique.

Les matériaux utilisés dans les batteries tout-solide peuvent être des matériaux inorganiques tels que des oxydes et des sulfures (on parle alors d'électrolytes « ISEs » pour l'anglais « Inorganic Solid Electrolytes »), ou des matériaux organiques tels que des polymères (on parle alors d'électrolytes solides polymériques ou électrolytes solides polymères « SPEs » pour l'anglais « Solid Polymer Electrolytes » ou d'électrolytes solides hybrides « HSEs », pour l'anglais « Hybrid Solid Electrolytes »).

Les électrolytes solides à base de polymères, de type SPEs et HSEs présentent de nombreux avantages : ils possèdent de bonnes propriétés d'interface avec les matériaux actifs, peuvent s'adapter aux changements de volume des électrodes, sont légers et permettent des procédés de mise en œuvre simples contrairement aux matériaux inorganiques. En revanche, la conductivité ionique des électrolytes actuels à base de polymères à température ambiante, de l'ordre de $10^{-7}$ $S.cm^{-1}$, reste trop faible pour être satisfaisante.

Plus précisément, un électrolyte solide polymère est composé d'une matrice polymère dans laquelle a été dissout un sel de lithium, qui est dépourvu de composants sous forme liquide, notamment de solvants liquides (plastifiants). La composition de l'électrolyte conducteur ionique mis en œuvre dans une batterie a un impact important sur la performance de cette dernière. Cette performance est d'autant plus élevée que la conductivité ionique de l'électrolyte, assurant la mobilité des ions $Li^+$ entre l'électrode positive et l'électrode négative, est elle-même élevée. La conduction des ions $Li^+$ au sein du polymère peut se faire via deux mécanismes concomitants : la diffusion des ions sous l'effet d'un gradient de concentration, et la complexation des ions $Li^+$ assistée par la mobilité segmentaire des chaines de polymère.

Les électrolytes solides de type SPEs et HSEs les plus répandus, notamment pour des batteries au lithium, sont à base de polyéthers, et plus particulièrement de poly(oxyéthylène) (POE) et ses dérivés. Toutefois, ces électrolytes

présentent des performances limitées en matière de nombre de transport des ions lithium et de conductivité ionique liés au mécanisme de coordination des ions. De ce fait, de nombreux polymères alternatifs ont été développés ces dernières années, comme par exemple des polycarbonates, polyesters, poly(arylène éther sulfone)s, polynitriles, polyalcools et polyamines, etc. Parmi eux, les polycarbonates aliphatiques, en particulier le poly(carbonate de triméthylène) (PTMC) et ses copolymères, sont apparus comme des matériaux hôtes alternatifs au POE, particulièrement intéressants pour former des électrolytes solides polymériques, en raison de leur structure fortement amorphe, de la flexibilité de leurs segments de chaîne, de leur constante diélectrique élevée, de leur faible toxicité et de leurs bonnes propriétés mécaniques.

Il est par ailleurs connu que les sels de lithium comportant des anions permettant une forte délocalisation des charges négatives permettent d'assurer une bonne conduction des ions lithium au sein des électrolytes polymères. En effet, cette forte délocalisation permet d'affaiblir la liaison ionique entre le cation $Li^+$ et son anion dans le but de conserver la mobilité du cation $Li^+$. De nombreux sels de lithium ont ainsi été proposés par l'art antérieur pour la préparation des électrolytes polymères pour batteries au lithium, dont le fer de lance est le bis(trifluorométhylsulfonyl)imidure de lithium (LiTFSI).

Toutefois, il subsiste toujours à l'heure actuelle un besoin pour un électrolyte solide à base de polymère qui présente une conductivité ionique élevée, permettant de former des batteries au lithium de haute performance.

La présente invention vise à proposer un tel électrolyte polymère.

Des objectifs supplémentaires de l'invention sont que cet électrolyte polymère, outre sa conductivité ionique élevée, réponde notamment aux critères de sécurité, stabilité chimique et stabilité électrochimique requis pour une mise en œuvre au sein d'une batterie au lithium.

RESUME DE L'INVENTION

Il a maintenant été découvert par les présents inventeurs que ces objectifs sont atteints par la mise en œuvre, dans un électrolyte solide, d'une combinaison spécifique d'un polymère et d'un sel de lithium particuliers.

Ainsi, selon un premier aspect, il est proposé selon la présente invention un électrolyte, particulièrement adapté pour une mise en œuvre dans une batterie au lithium tout-solide, qui comprend un sel de lithium et un polymère comportant un motif de répétition de formule (I) :

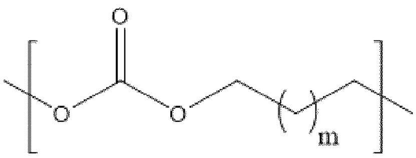

(I)

dans laquelle m est égal à 0, 1 ou 2,
le sel de lithium présentant la formule (III) :

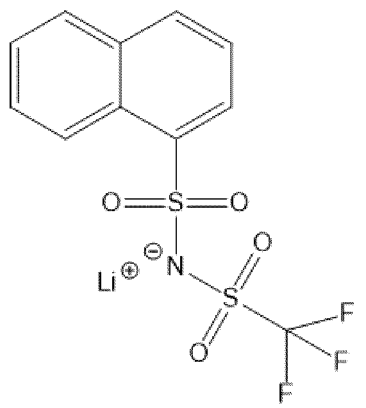

(III).

Dans des modes de réalisation particuliers de l'invention, le ratio molaire « sel de lithium / groupements carbonate du polymère » $[Li]/[CO_3]$, dans l'électrolyte, est compris entre 1/2 et 1/40.

Préférentiellement, le motif de répétition de formule (I) est le seul motif de répétition du polymère.

Le polymère est par exemple un poly(carbonate de triméthylène) (PTMC), dont les bouts de chaine sont préférentiellement dépourvus de fonction hydroxyle libre. Ce polymère peut ainsi notamment présenter la formule

générale (II) :

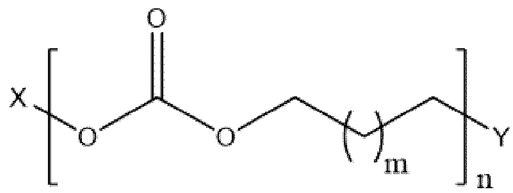

(II)

dans laquelle

n est un nombre entier supérieur ou égal à 10, de préférence compris entre 10 et 100,
m est égal à 0, 1 ou 2, de préférence égal à 1,
et X et Y, identiques ou différents, représentent chacun un groupement dépourvu de fonction hydroxyle libre, ce groupement étant de préférence choisi parmi les alkylaryles, optionnellement substitués, et les alcanoates.

Le polymère peut notamment répondre à la formule générale (IIa) :

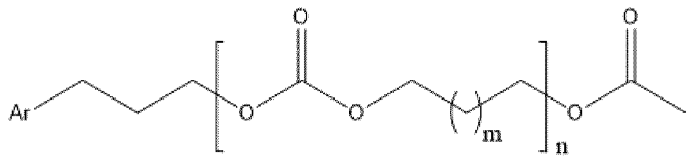

(IIa)

dans laquelle

n est un nombre entier supérieur ou égal à 10, de préférence compris entre 10 et 100,
m est égal à 0, 1 ou 2, de préférence égal à 1,
et Ar représente un groupement aryle, par exemple phényle ou naphtyle, optionnellement substitué.

Le polymère présente préférentiellement une masse molaire moyenne en nombre comprise entre 1 000 g/mol et 10 000 g/mol.
L'électrolyte selon l'invention se présente de préférence sous forme solide, notamment sous forme d'un film ou d'une membrane.
Un aspect supplémentaire de l'invention est un procédé de préparation d'un électrolyte selon l'invention, ce procédé comprenant une étape de mélange du polymère et du sel de lithium entrant dans la constitution de cet électrolyte, tels que définis ci-avant et ci-après.
Un autre aspect de l'invention concerne l'utilisation d'un électrolyte selon l'invention dans une cellule électrochimique pour batterie au lithium, en particulier tout-solide.
L'invention a également pour objet une cellule électrochimique pour batterie au lithium, comprenant une électrode positive, une électrode négative et un électrolyte solide, cet électrolyte étant un électrolyte solide selon l'invention, répondant à l'une ou plusieurs des caractéristiques décrites ci-avant et ci-après. Un autre objet de l'invention est une batterie au lithium comprenant au moins une cellule électrochimique selon l'invention.
Les caractéristiques et avantages de l'invention apparaîtront plus clairement à la lumière de la description détaillée et des exemples de mise en œuvre ci-après, nullement limitatifs de l'invention, avec l'appui des figures 1 à 5.

BREVE DESCRIPTION DES DESSINS

La figure 1 montre le spectre de RMN $^1H$ d'un PTMC dans le $CDCl_3$ (traces de dichlorométhane).
La figure 2 montre le spectre de RMN $^1H$ d'un PTMC acétylé dans le $CDCl_3$.
La figure 3 montre les courbes obtenues par analyse par calorimétrie différentielle à balayage (10 K/min) pour des électrolytes polymères, respectivement, PTMC / LiNPTFSI (conforme à l'invention), et PTMC / LiTFSI (exemple comparatif), le PTMC utilisé étant acétylé et présentant une masse molaire moyenne en nombre de 2900 g/mol et chacun des électrolytes polymères présentant un ratio molaire [Li]/[$CO_3$] = 1/15.

La figure 4 montre le circuit équivalent utilisé pour l'adaptation des données d'impédance pour la détermination par spectroscopie d'impédance électrochimique de la conductivité des électrolytes polymères.

La figure 5 montre les courbes de conductivité, en fonction de la température, des électrolytes polymères, respectivement, PTMC / LiNPTFSI (conforme à l'invention), et PTMC / LiTFSI (exemple comparatif), le PTMC utilisé étant acétylé et présentant une masse molaire moyenne en nombre de 2900 g/mol et chacun des électrolytes polymères présentant un ratio molaire [Li]/[$CO_3$] = 1/15.

DESCRIPTION DETAILLEE

Composition de l'électrolyte

L'électrolyte selon l'invention comprend un sel de lithium répondant à la formule générale (II) et au moins un polymère comprenant un motif de répétition de formule (I).

On englobe dans la présente description, dans le terme polymère, aussi bien les polymères à strictement parler, c'est-à-dire comprenant un unique motif de répétition, ce motif répondant à la formule générale (I), que les copolymères, comprenant plusieurs motifs de répétition différents, dont au moins un répond à la formule (I).

Selon la présente invention, au moins un, de préférence chaque, polymère entrant dans la composition de l'électrolyte selon l'invention comprend un motif de répétition de formule (I) :

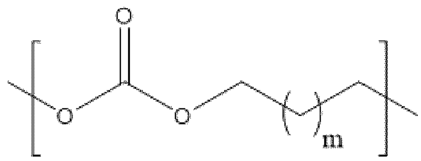

(I)

dans laquelle m est égal à 0, 1 ou 2, et préférentiellement égal à 1.

Ce motif de répétition (également nommé unité monomère) peut être le seul motif de répétition du polymère, ce dernier relevant alors de la famille des poly(carbonate d'alkylène), et comprenant alors de préférence de 10 à 100 répétitions du motif de répétition de formule (I). Préférentiellement, le polymère est un poly(carbonate de triméthylène) (PTMC), m étant égal à 1 dans la formule (I), ce PTMC comprenant de préférence de 10 à 100 répétitions du motif de répétition de formule (I).

Alternativement, le polymère entrant dans la composition de l'électrolyte selon l'invention peut être un copolymère, comprenant une unité monomère de formule (I), et au moins une unité monomère différente, par exemple d'ε-caprolactone, et/ou plusieurs unités de formule (I) différentes, c'est-à-dire présentant des valeurs de m différentes les unes des autres.

Dans la composition de l'électrolyte selon l'invention, le polymère à motif de répétition de formule (I) est combiné au sel de lithium de formule (II), le N-(1-naphtalènesulfonyl)trifluorométhylsulfonamidure de lithium (LiNPTFSI). Ce sel de lithium peut avoir été obtenu par toute voie de synthèse dont le développement est du ressort de l'homme du métier, ou par le procédé décrit ci-après dans la présente description.

De manière inattendue, il a été découvert par les présents inventeurs que l'électrolyte combinant les deux substances que sont le LiNPTFSI et un polymère à motif de répétition de formule (I), présente une conductivité ionique particulièrement élevée. A titre d'exemple, la conductivité ionique d'un électrolyte conforme à l'invention, comprenant un poly(carbonate de triméthylène) (PTMC) en tant que polymère et du LiNPTFSI, sous forme solide, a été mesurée par les présents inventeurs à une valeur de $1,9.10^{-2}$ $mS.cm^{-1}$ à 80°C, contre $6,3.10^{-3}$ $mS.cm^{-1}$, à la même température, pour une composition d'électrolyte similaire, en différant uniquement en ce que le sel de lithium qu'elle contient n'est pas le LiNPTFSI mais est le sel de référence dans le domaine, le LiTFSI. De manière plus générale, quelle que soit la température, la conductivité ionique de l'électrolyte PTMC - LiNPTFSI selon l'invention est environ 3 fois supérieure à la conductivité de la composition PTMC - LiTFSI.

On ne préjugera pas ici des mécanismes sous-tendant l'obtention d'une aussi bonne performance, en termes de conductivité ionique, de l'électrolyte selon l'invention. On peut penser que participent à l'obtention de cette performance à la fois :

- la structure spécifique de l'anion entrant dans la constitution du sel de lithium, au sein duquel la charge anionique est fortement délocalisée, entrainant un affaiblissement de la liaison ionique entre le cation $Li^+$ et son anion, ce dont il résulte une forte mobilité du cation $Li^+$ ;
- et les propriétés du polymère PTMC, en particulier son nombre de transport ionique élevé ($t_+$ = 0,75).

Rien ne laissait cependant présager d'une conductivité ionique aussi élevée pour l'électrolyte selon l'invention, et ce d'autant plus que le LiNPTFSI a en lui-même été décrit par l'art antérieur, illustré notamment par la publication de Ladouceur et al., 2015, Journal of Power Sources, 293: 78-88, mis en œuvre dans un électrolyte liquide formé d'un mélange de carbonate d'éthylène (EC) et carbonate de diéthyle (DEC), comme présentant une conductivité ionique bien inférieure à celle du LiTFSI. Il est ainsi particulièrement surprenant que, dans le contexte d'un électrolyte polymère comprenant spécifiquement un polymère à motif de répétition de formule (I), les performances de conductivité du LiNPTFSI soient supérieures, et même, largement supérieures, à celles du LiTFSI.

Le ou les polymères à motif de répétition de formule (I) entrant dans la composition de l'électrolyte selon l'invention s'inscrivent dans la famille des polycarbonates aliphatiques, plus particulièrement des poly(carbonate d'alkylène), et préférentiellement des poly(carbonate de triméthylène) (PTMC). Les polymères de la famille des poly(carbonate de triméthylène), mis en œuvre dans un électrolyte solide pour batterie au lithium, offrent notamment les avantages de permettre d'accéder à une large fenêtre de stabilité électrochimique (jusqu'à 4,5 V vs. $Li/Li^+$), et de présenter une bonne stabilité thermique ainsi, comme indiqué ci-avant, qu'un nombre de transport ionique élevé ($t_+$ = 0,75).

Dans des modes de réalisation particuliers de l'invention, au moins un polymère à motif de répétition de formule (I), en particulier du type PTMC, de préférence l'ensemble de ces polymères contenus dans l'électrolyte selon l'invention, présente une masse molaire moyenne en nombre inférieure ou égale à 10 000 g/mol, et de préférence supérieure ou égale à 1 000 g/mol et préférentiellement supérieure ou égale à 1 500 g/mol.

La masse molaire moyenne en nombre peut par exemple être déterminée par chromatographie d'exclusion stérique, éventuellement couplée avec la diffusion de lumière statique. Cette détermination entre dans les compétences de base de l'homme du métier.

Dans des modes de réalisation particuliers de l'invention, le ratio molaire « sel de lithium de formule (III) / groupements carbonate du polymère à motif de répétition de formule (I) », de préférence pour chaque tel polymère contenu dans l'électrolyte, en particulier polymère du type PTMC, exprimé sous forme de ratio molaire $[Li]/[CO_3]$, est compris entre 1/2 et 1/40, de préférence compris entre 1/5 et 1/25, et par exemple égal à 1/15.

Dans des modes de réalisation particulièrement préférés de l'invention, le polymère à motif de répétition de formule (I), en particulier le PTMC, est dépourvu de fonctions hydroxyle libres en bouts de chaine.

Le polymère à motif de répétition de formule (I) présente alors de préférence la formule générale (II) :

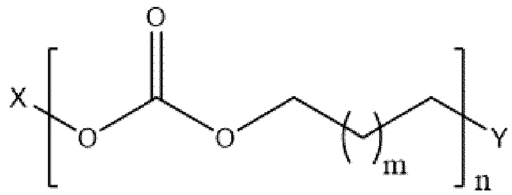

(II)

dans laquelle

n est un nombre entier supérieur ou égal à 10, de préférence compris entre 10 et 100,
m est égal à 0, 1 ou 2, de préférence égal à 1,
et X et Y, identiques ou différents, représentent chacun un groupement dépourvu de fonction hydroxyle libre.

Le polymère à motif de répétition de formule (I) présente par exemple la formule générale (II') :

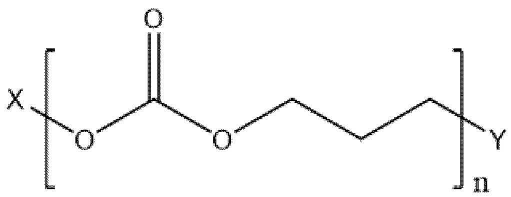

(II')

dans laquelle

n est un nombre entier supérieur ou égal à 10, de préférence compris entre 10 et 100,
et X et Y, identiques ou différents, représentent chacun un groupement dépourvu de fonction hydroxyle libre.

En fonction de la méthode mise en œuvre pour synthétiser le polymère, en particulier le PTMC, X peut être un groupement issu d'un composé initiateur de la réaction de polymérisation à fonction hydroxyle unique, par exemple le 3-phényl-1-propanol, ou consister en un groupement protecteur d'une fonction hydroxyle.

Y peut quant à lui consister en un groupement protecteur d'une fonction hydroxyle.

On entend, par groupement protecteur d'une fonction hydroxyle, tout groupement utilisé de manière classique en elle-même pour protéger une fonction hydroxyle, c'est-à-dire pour masquer sa réactivité. Il entre dans les compétences de l'homme du métier de savoir identifier les groupements protecteurs de fonctions hydroxyles pouvant être mis en œuvre dans le cadre de l'invention. Des exemples de tels groupements protecteurs sont notamment listés dans l'ouvrage de Greene, « Protective groups in Organic Synthesis » (4e éd.), Wiley & Sons, 2006.

Chacun des groupements protecteurs d'une fonction hydroxyle mis en œuvre selon l'invention peut par exemple être choisi parmi les groupements alkyle, acyle, notamment acétyle, benzyle, silyle, sulfonyle, alkoxy-alkyle, par exemple méthoxyméthyle, méthoxyéthoxyméthyle ou benzoxyméthyle, etc.

X et/ou Y peuvent notamment être obtenus par réaction du polymère, en particulier du PTMC, comprenant des fonctions hydroxyle libres, avec un composé choisi parmi les chlorures d'acyle, tels que le chlorure de benzoyle et le chlorure d'acétyle, les anhydrides d'acide, tel que l'anhydride acétique, et les isocyanates, tel que l'isocyanate de p-tolènesulfonyle.

Il entre dans les compétences de l'homme du métier de déterminer les conditions réactionnelles permettant de protéger les groupements hydroxyle libres éventuels du polymère, en particulier du PTMC, en fonction du groupement protecteur d'une fonction hydroxyle souhaité.

Préférentiellement, dans la formule générale (II) ou (II'), X et Y, identiques ou différents, sont choisis parmi les alkylaryles, optionnellement substitués, et les alcanoates. X et Y, identiques ou différents, peuvent notamment être choisis parmi :

- les alkylaryles, éventuellement substitués, de préférence en C8-C20, et présentant de préférence une chaine hydrocarbonée aliphatique, par exemple en C2-C4, substituée, préférentiellement à son extrémité opposée à son extrémité liée au motif de répétition du polymère, par un groupement aryle ; préférentiellement, ce groupement aryle est alors de préférence en C6-C10, tel qu'un groupement phényle ou naphtyle, et il peut optionnellement être substitué, en particulier par un ou plusieurs groupements alkyle, alcényle et/ou alcynyle, de préférence chacun en C2-C4, par exemple par un groupement vinyle ; au titre de tel groupement aryle substitué, on peut par exemple citer le groupement styryle ;
- et les alcanoates en C2-C6, tel que l'acétate.

Dans des modes de réalisation particuliers de l'invention, le polymère à motif de répétition de formule (I) répond à la formule générale (IIb) :

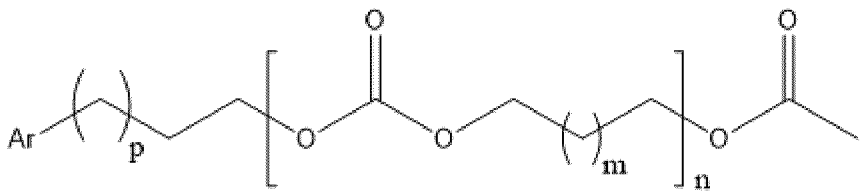

(IIb)

dans laquelle

n est un nombre entier supérieur ou égal à 10, de préférence compris entre 10 et 100,
m est égal à 0, 1 ou 2, de préférence égal à 1,
p est égal à 0, 1 ou 2, de préférence égal à 1,
et Ar représente un groupement aryle optionnellement substitué.

Le polymère à motif de répétition de formule (I) présente par exemple la formule générale (IIb') :

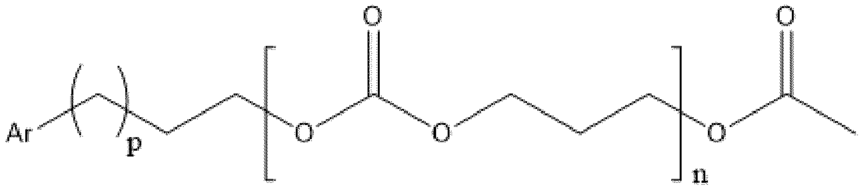

(IIb')

dans laquelle

n est un nombre entier supérieur ou égal à 10, de préférence compris entre 10 et 100,
m est égal à 0, 1 ou 2, de préférence égal à 1,
p est égal à 0, 1 ou 2, de préférence égal à 1,
et Ar représente un groupement aryle optionnellement substitué.

Dans des modes de réalisation particuliers de l'invention, le polymère à motif de répétition de formule (I) répond à la formule générale (IIa) :

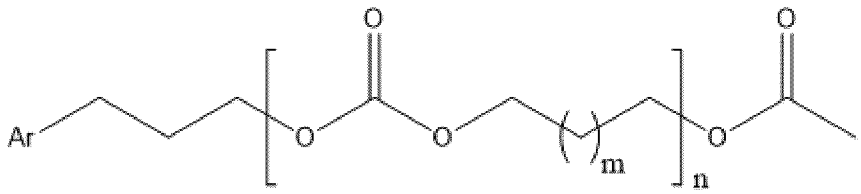

(IIa)

dans laquelle

n est un nombre entier supérieur ou égal à 10, de préférence compris entre 10 et 100,
m est égal à 0, 1 ou 2, de préférence égal à 1,
et Ar représente un groupement aryle optionnellement substitué.

Le polymère à motif de répétition de formule (I) présente par exemple la formule générale (IIa') :

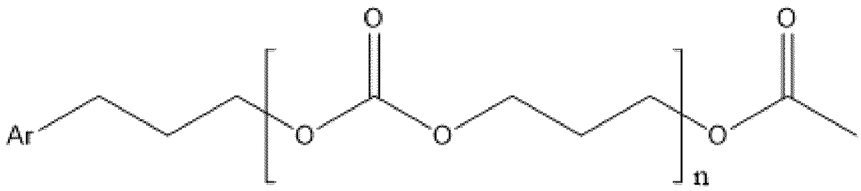

(IIa')

dans laquelle

n est un nombre entier supérieur ou égal à 10, de préférence compris entre 10 et 100,
m est égal à 0, 1 ou 2, de préférence égal à 1,
et Ar représente un groupement aryle optionnellement substitué.

Dans les formules (IIa), (IIa'), (IIb), (IIb') ci-dessus, Ar peut notamment représenter un groupement aryle en C6-C10, tel qu'un groupement phényle ou naphtyle, ce groupement pouvant optionnellement être substitué par un ou plusieurs groupements alkyle, alcényle et/ou alcynyle, de préférence chacun en C2-C4, par exemple par un groupement vinyle. Au titre de tel groupement aryle substitué, on peut par exemple citer le groupement styryle.

Un exemple particulier de polymère à motif de répétition de formule générale (I) pouvant être contenu dans la composition de l'électrolyte selon l'invention répond à la formule générale (IIc) :

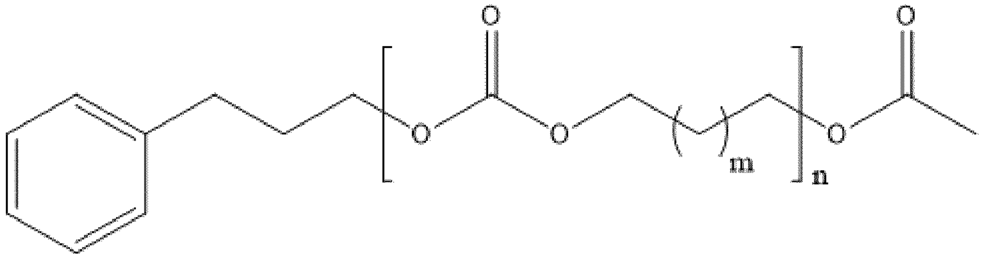

(IIc)

dans laquelle

n est un nombre entier supérieur ou égal à 10, de préférence compris entre 10 et 100,
et m est égal à 0, 1 ou 2, préférentiellement égal à 1,
et, plus particulièrement, à la formule générale (IIc') :

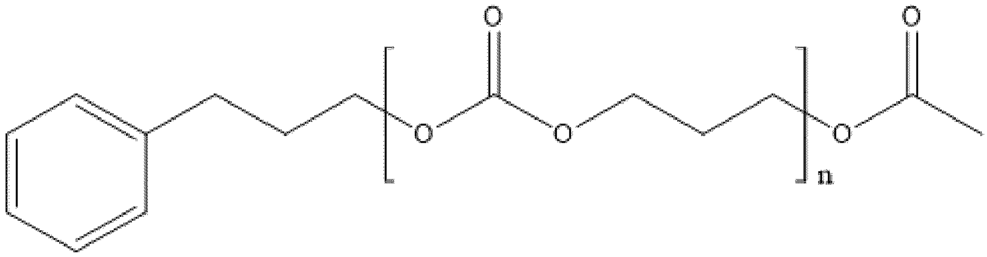

(IIc')

dans laquelle n est un nombre entier supérieur ou égal à 10, de préférence compris entre 10 et 100.

Le ou les polymères entrant dans la composition de l'électrolyte selon l'invention peuvent être réticulés ou non-réticulés. Dans la configuration dans laquelle au moins un de ces polymères est à l'état réticulé, le sel de lithium peut avoir été combiné avec le(s) polymère(s) avant ou après l'étape de réticulation.

La composition de l'électrolyte selon l'invention peut en outre contenir tout additif classique en lui-même dans le domaine des batteries au lithium, tel que, par exemple, une charge inorganique conductrice du cation du sel de lithium l'électrolyte.

L'électrolyte selon l'invention se présente de préférence sous forme solide, en particulier sous forme d'un film ou d'une membrane, pouvant être directement utilisé au sein d'une cellule électrochimique pour batterie, au titre d'électrolyte solide.

Il consiste de préférence en un électrolyte solide polymérique (SPE) ou un électrolyte solide hybride (HSE).

Par électrolyte solide, on entend dans la présente description, de manière classique en elle-même, un électrolyte dépourvu de composants sous forme liquide, et pouvant faire office, dans une cellule électrochimique, à la fois de conducteur ionique et de séparateur, empêchant les électrodes d'entrer en contact physique l'une avec l'autre.

Procédé de préparation de l'électrolyte

Un procédé de préparation de l'électrolyte selon l'invention comprend le mélange du polymère à motif de répétition de formule (I) et du sel de lithium de formule (III).

Ce mélange peut être réalisé par voie solvant, le sel de lithium, le(s) polymère(s) et les additifs éventuels étant mis en contact les uns avec les autres dans un solvant organique ou un mélange de solvants organiques, de préférence aprotique(s) et préférentiellement polaire(s), par exemple le tétrahydrofurane. La mise en contact peut être réalisée à une température comprise entre 30 et 70°C, par exemple d'environ 50°C, pendant une durée comprise entre 12 et 24 heures. Elle est de préférence suivie d'une étape d'évaporation du ou des solvants mis en œuvre, notamment sous pression réduite, à une température assurant cette évaporation.

Selon d'autres variantes de l'invention, le mélange peut être réalisé par voie fondue, en l'absence de solvants. Dans de tels modes de mise en œuvre, le sel de lithium, le(s) polymère(s) et les additifs éventuels sont portés à une température supérieure à la température de transition vitreuse de chacun des polymères, et mélangés lorsque chaque polymère se trouve à l'état fondu, le mélange étant ensuite de préférence refroidi pour provoquer sa solidification. Le procédé de préparation de l'électrolyte selon l'invention peut comprendre une étape de réticulation d'au moins un polymère contenu dans cet électrolyte, cette étape pouvant être réalisée avant, ou après, le mélange du sel de lithium avec

le(s) polymère(s).

L'électrolyte solide selon l'invention peut être mis en forme sous la forme d'un film ou d'une membrane, pouvant être directement utilisé au sein d'une cellule électrochimique pour batterie, pour y former un électrolyte solide.

Cette mise en forme peut être réalisée en fin du procédé de préparation de l'électrolyte, avant l'étape de passage à l'état solide, par dépôt de la composition d'électrolyte à l'état fluide sur la surface d'un substrat adapté, de préférence de forme plate, puis solidification.

A titre d'exemple, dans les modes de réalisation dans lesquels l'électrolyte est formé en voie solvant, le dépôt sur la surface du substrat peut avantageusement être réalisé avant l'étape d'évaporation du ou des solvants, par exemple par enduction. Dans les modes de réalisation dans lesquels l'électrolyte est formé en voie fondue, le dépôt sur la surface du substrat peut avantageusement être réalisé sur la composition à l'état fondu, par exemple par extrusion, avant l'étape de refroidissement. L'ensemble de ces techniques sont bien connues de l'homme du métier.

Le substrat mis en œuvre est alors choisi parmi les substrats en matériaux chimiquement inertes vis-à-vis des composants de l'électrolyte, par exemple en verre, silicone, polytétrafluoroéthylène (PTFE), polypropylène, etc.

Après solidification, le film ou la membrane obtenu peut être désolidarisé ou non du substrat pour son utilisation ultérieure.

Le sel de lithium LiNPTFSI mis en œuvre dans l'électrolyte selon l'invention peut avoir été au préalable préparé par toute méthode classique en elle-même pour l'homme du métier, par exemple par le procédé décrit dans la publication de Ladouceur et al. susmentionnée.

Les présents inventeurs ont toutefois développé un procédé de synthèse de ce sel particulièrement avantageux, en ce qu'il permet, en peu d'étapes, d'obtenir le LiNPTFSI avec un rendement élevé. Ainsi, un aspect de l'invention concerne un procédé de préparation du LiNPTFSI, de formule (III).

Ce procédé comprend des étapes successives de :

- préparation du (naphtalène-1-sulfonyl)trifluorométhylsulfonamide (NPTFSI), de formule générale (IVb) :

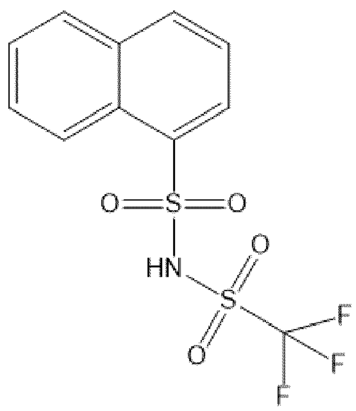

(IVb)

par réaction du chlorure de naphtalèn-1-sulfonyle, de formule (IVc) :

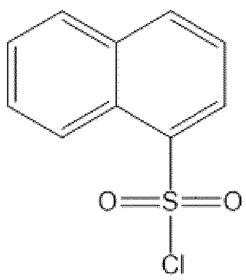

(IVc)

avec le trifluorométhanesulfonamide,

en présence d'un catalyseur nucléophile et d'une amine tertiaire,

- purification du (naphtalène-1-sulfonyl)trifluorométhylsulfonamide ainsi obtenu,
- et mise en contact du (naphtalène-1-sulfonyl)trifluorométhylsulfonamide ainsi purifié avec l'hydrure de lithium LiH.

Le chlorure de naphtalèn-1-sulfonyle de formule (IVb) ci-avant peut avoir été obtenu par toute méthode classique

en elle-même. Dans des modes de mise en œuvre particuliers de l'invention, le procédé comprend une étape préalable de préparation du chlorure de naphtalèn-1-sulfonyle par chloration du 1-naphtalènesulfonate de sodium, par réaction avec du chlorure de thionyle de formule générale (IVa) :

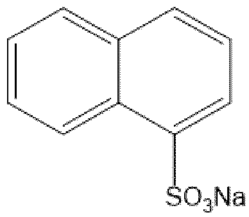

(IVa).

Cette réaction de chloration peut notamment être réalisée dans un solvant aprotique, de préférence polaire, tel que le diméthylformamide. Elle est préférentiellement réalisée à température ambiante, c'est-à-dire comprise entre 18 et 25°C environ, et pendant une durée de quelques heures, notamment comprise entre 4 et 24 heures.

Le procédé selon l'invention comprend de préférence une étape de séparation du chlorure de naphtalèn-1-sulfonyle ainsi obtenu du milieu réactionnel, par exemple par précipitation dans l'eau et filtration, ainsi, préférentiellement, qu'une étape de purification de ce composé, par exemple par sublimation après séchage.

L'étape de préparation du (naphtalène-1-sulfonyl)trifluorométhylsulfonamide (NPTFSI), de formule (IVc), à partir du chlorure de naphtalèn-1-sulfonyle de formule (IVb), est avantageusement réalisée par introduction du motif trifluorométhylsulfonamide sur le groupement sulfonyle de ce dernier par substitution nucléophile. Cette réaction est réalisée en présence d'une amine tertiaire non nucléophile, telle que la triéthylamine, le 1,4-diazabicyclo[2.2.2]octane (DABCO) ou le 1,8-diazabicyclo[5.4.0]undéc-7-ène (DBU), et en présence d'un catalyseur nucléophile tel que la 4-diméthylaminopyridine (DMAP).

Cette réaction est de préférence mise en œuvre dans un solvant aprotique, de préférence polaire, tel que l'acétonitrile. Elle est préférentiellement réalisée à température ambiante, et pendant une durée de quelques heures, notamment comprise entre 12 et 30 heures.

L'étape de purification du (naphtalène-1-sulfonyl)trifluorométhylsulfonamide ainsi obtenu peut être réalisée de toute manière classique en elle-même. Elle peut notamment être réalisée par concentration du milieu réactionnel, introduction du résidu dans l'acétate d'éthyle, et lavage(s) de la phase organique, par une solution aqueuse acide, par exemple d'acide chlorhydrique, puis, optionnellement une solution aqueuse neutre, par exemple une solution saturée en chlorure de sodium. Optionnellement, le procédé selon l'invention peut ensuite comprendre des étapes d'évaporation de la phase organique, introduction dans un solvant aprotique, de préférence polaire, tel que le dichlorométhane, et isolation du précipité de (naphtalène-1-sulfonyl)trifluorométhylsulfonamide obtenu, de préférence par filtration.

L'étape de synthèse finale du procédé selon l'invention, à partir du (naphtalène-1-sulfonyl)trifluorométhylsulfonamide, est réalisée par mise en contact de ce composé avec l'hydrure de lithium. Cette mise en contact est de préférence réalisée dans un solvant aprotique, de préférence polaire, tel que le tétrahydrofurane. Elle est préférentiellement réalisée à température ambiante, et pendant une durée de quelques heures, notamment comprise entre 1 et 24 heures.

Cette étape de synthèse finale est de préférence suivie d'une étape de purification du sel de lithium de formule (III) obtenu, par exemple par filtration du milieu réactionnel de sorte à en éliminer l'excès d'hydrure de lithium, de préférence suivie d'une étape de séchage.

Le procédé de préparation du sel de lithium de formule (III) selon l'invention, répondant à l'une ou plusieurs des caractéristiques décrites ci-avant, permet avantageusement d'obtenir ce sel de lithium de manière simple, en trois étapes de synthèse seulement, et avec un haut rendement et un niveau de pureté élevé. Le polymère à motif de répétition de formule générale (I), en particulier le PTMC, peut quant à lui être obtenu par toute méthode de synthèse connue de l'homme du métier, par exemple par réaction de polymérisation par ouverture de cycle du carbonate d'alkylène correspondant, en particulier de triméthylène, en présence d'un initiateur de la réaction de polymérisation, et le cas échéant d'un catalyseur tel que le phosphate de diphényle. Des exemples de tels procédé sont notamment décrits dans le document FR 3130454, ou ci-après dans la présente description.

Cellule électrochimique

L'électrolyte selon l'invention peut trouver application dans des systèmes électrochimiques variés, notamment dans des systèmes de stockage de l'énergie, en particulier des batteries au lithium tout-solide.

Ainsi, la présente invention vise également l'utilisation d'un électrolyte selon l'invention pour la fabrication d'une cellule électrochimique pour batterie au lithium, en particulier tout-solide. La présente invention s'exprime ainsi également dans les termes de l'utilisation d'un électrolyte selon l'invention dans une cellule électrochimique pour batterie au lithium.

Un objet supplémentaire de l'invention est une cellule électrochimique pour batterie au lithium comprenant une électrode positive, une électrode négative et un électrolyte solide selon l'invention.

Par électrode positive, on entend dans la présente description, de manière classique en elle-même, l'électrode qui fait office de cathode lorsque la cellule électrochimique débite du courant (c'est-à-dire lorsqu'elle est en processus de décharge) et qui fait office d'anode lorsque la cellule électrochimique est en processus de charge.

Par électrode négative, on entend, également de manière classique en elle-même, l'électrode qui fait office d'anode lorsque la cellule électrochimique débite du courant (c'est-à-dire lorsqu'elle est en processus de décharge) et qui fait office de cathode lorsque la cellule de batterie est en processus de charge. Les électrodes de la cellule électrochimique selon l'invention peuvent être formées en tout matériau classique en lui-même pour ce type d'application.

A titre d'exemples, pour une cellule électrochimique au lithium :

- l'électrode positive peut comprendre, en tant que matière électrochimiquement active, des composés lamellaires, tels que $LiCoO_2$, $LiNiO_2$ et mixtes $Li(Ni,Co,Mn,Al)O_2$, ou des composés de structure spinelle de compositions proches de $LiMn_2O_4$, des phosphates du lithium, en particulier $LiMnFePO_4$ ou $LiFePO_4$, etc.,
- l'électrode négative peut comprendre, en tant que matière électrochimiquement active, du lithium métal ou un alliage à base de lithium, des matériaux d'intercalation tels que le graphite, de l'oxyde de titane lithié ($Li_4Ti_5O_{12}$), du silicium, des composites graphite/silicium, etc.

Chacune des électrodes de la cellule électrochimique peut être associée à un collecteur de courant.

L'électrolyte solide se présente de préférence, au sein de la cellule électrochimique selon l'invention, sous forme d'un film ou d'une membrane, pris en sandwich entre l'électrode positive et l'électrode négative, ce film ou cette membrane faisant en outre de préférence office de séparateur entre ces électrodes.

<u>Batterie</u>

Des cellules électrochimiques selon l'invention peuvent être mises en œuvre au sein d'une batterie au lithium.

Ainsi, un objet de l'invention est une batterie au lithium, par exemple une batterie lithium-ion ou lithium-métal, comprenant une, de préférence plusieurs, cellules électrochimiques selon l'invention, dans lesquelles l'électrolyte répond à l'une ou plusieurs des caractéristiques définies ci-avant.

La batterie selon l'invention peut se présenter sous toute forme classique en elle-même, notamment présenter un format du type planaire, par exemple du type pile bouton, un format cylindrique, en particulier un format AAA, AA, C, D ou DD, un format bobiné ou spiralé, un format prismatique, etc.

Les exemples de mise en œuvre ci-après sont fournis à simple titre illustratif et nullement limitatifs de l'invention.

EXEMPLES

<u>Matériel et méthodes de caractérisation</u>

Les réactifs commerciaux ont été utilisés sans purification supplémentaire. Le 1-naphtalènesulfonate de sodium a été acheté auprès de Fisher Scientific. Les autres réactifs et solvants ont été acheté chez Sigma-Aldrich. Les réactions ont été réalisées sous atmosphère inerte (argon), sauf mention contraire explicite. Les spectres RMN $^{1}H$ , $^{19}F$ et $^{13}C$ ont été réalisés sur un spectromètre Bruker NEO 400MHz équipé d'une sonde 5 mm BBO Smart Probe. Les spectres RMN $^{1}H$ et $^{13}C$ ont été référencés au pic du solvant, tandis qu'un étalon interne, le $C_6F_6$ ($\delta$ = 0 ppm) a été utilisé pour la RMN $^{19}F$.

Les spectres de spectroscopie infra-rouge à transformée de Fourrier (FT-IR) ont été enregistrés avec un spectromètre PerkinElmer Spectrum Two®.

Les analyses de spectrométrie de masse ont été réalisées à l'aide d'une unité LC-MS/TOF de la série Agilent 6230.

Les analyses élémentaires CHNS ont été effectuées à l'aide d'un analyseur élémentaire organique Elementar Unicube®.

Les analyses de calorimétrie différentielle à balayage (DSC) ont été réalisées avec un calorimètre Netzsch DSC 404 F1 Pegasus® et des creusets aluminium 40 $\mu$L basse pression, à 10 K/min sous hélium.

1/ <u>Exemple 1</u> - Synthèse du LiNPTFSI

Le N-(1-naphtalènesulfonyl)trifluorométhylsulfonamidure de lithium (LiNPTFSI) est préparé par les 3 étapes ci-après.

1.1/ Etape 1 - Synthèse du chlorure de naphthalèn-1-sulfonyle

Le composé intermédiaire chlorure de naphthalèn-1-sulfonyle, de formule (IVc) :

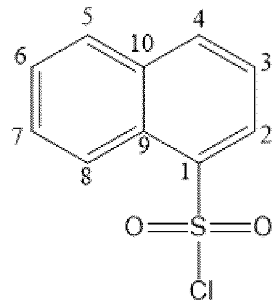

(IVc)

est préparé comme suit.

Dans un ballon tricol sous argon, du chlorure de thionyle (15 mL, 199,6 mmol, 2,3 éq.) est ajouté, au goutte à goutte et sous agitation, à une solution de 1-naphtalènesulfonate de sodium (20 g, 86,9 mmol, 1 éq.) dans le diméthylformamide (DMF) anhydre (80 mL) préalablement refroidie à 0°C. Une fois l'addition terminée, le milieu réactionnel est laissé revenir à température ambiante et agité pendant 18h. Le milieu réactionnel est ensuite versé au goutte à goutte dans de l'eau distillée froide et le précipité obtenu est filtré sur fritté et séché sous vide. Le solide brun récolté est purifié par sublimation pour donner un solide blanc (17,656 g, Rendement = 90 %).

RMN $^1$H (400 MHz, $CDCl_3$) : $\delta$ (ppm) : 8.79 (d, $^3J$ = 8.8 Hz, 1H, H8), 8.36 (d, $^3J$ = 7.4 Hz, 1H, H2), 8.21 (d, $^3J$ = 8.2 Hz, 1H, H4), 8.00 (d, $^3J$ = 8.2 Hz, 1H, H5), 7.80 (ddd, $^3J$ = 7.4 Hz, $^3J$ = 8.8 Hz, $^4J$ = 1.4 Hz, 1H, H7), 7.68 (ddd, $^3J$ = 7.2 Hz, $^3J$ = 8.2 Hz, $^4J$ = 1.1 Hz, 1H, H6), 7.59 (dd, $^3J$ = 7.4 Hz, $^3J$ = 8.2 Hz, 1H, H3). (Attribué avec un spectre COSY)
RMN $^{13}$C{H} (100 MHz, $CDCl_3$) : $\delta$ (ppm) : 139.6 (C1), 137.1 (C4), 134.5 (C10), 129.6 (C7), 129.5 (C2), 129.4 (C5), 127.9 (C6), 127.5 (C9), 124.2 (C8), 124.0 (C3). (Attribué avec un spectre HSQC)
FT-IR ($cm^{-1}$) : 3063 ($v_{C-H}$), 1590 (vc=c), 1560, 1506 (vc=c), 1361 ($v_{S=O}$), 1172 ($v_{S=O}$), 1138 ($v_{S=O}$), 969, 866, 830, 803, 767($v_{C-H}$), 674, 624, 577, 506. Calculé pour $C_{10}H_7ClO_2S$ : C 52,99, H 3,11, S 14,14 % ; Trouvé : C 52,92, H 2,98, S 14,13%.

1.2/ Etape 2 - Synthèse du N-(1-naphtalènesulfonyl)trifluorométhylsulfonamide

Le composé intermédiaire N-(1-naphtalènesulfonyl)trifluorométhylsulfonamide (NPTFSI), de formule (IVb) :

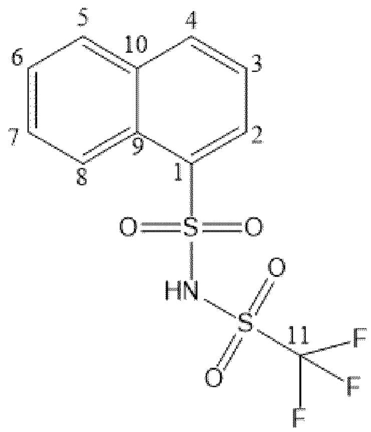

(IVb)

est préparé comme suit.

Dans un ballon bicol sous argon, sont introduits successivement du trifluorométhanesulfonamide (3,38 g, 22,1 mmol, 1 éq.), de l'acétonitrile anhydre (35 mL), de la 4-diméthylaminopyridine (DMAP) (0,27 g, 2,21 mmol, 0,1 éq.) ainsi que de la triéthylamine (6,2 mL, 44,2 mmol, 2 éq.). Une solution de chlorure de naphthalèn-1-sulfonyle (5,0 g, 22,1 mmol, 1 éq.) dans l'acétonitrile anhydre (20 mL) est ensuite ajoutée sous agitation au milieu réactionnel, au goutte à goutte à 0°C. Une fois l'addition terminée, le milieu réactionnel est laissé revenir à température ambiante et agité pendant 17h. Le milieu

réactionnel est ensuite concentré sous vide et repris dans l'acétate d'éthyle. La phase organique est extraite trois fois avec une solution aqueuse d'HCl (1M) ainsi qu'une fois avec une solution saturée en NaCl. La phase organique est séchée sur $MgSO_4$, filtrée et séché sous vide. Le brut réactionnel est précipité avec du dichlorométhane pour donner, après filtration, un solide blanc (4,54 g, Rendement = 61 %).

RMN $^1H$ (400 MHz, MeOD) : $\delta$ (ppm) : 8.82 (d, $^3J$ = 8.5 Hz, 1H, H8), 8.22 (dd, $^3J$ = 7.5 Hz, $^4J$ = 1.0 Hz, 1H, H2), 8.06 (d, $^3J$ = 8.1 Hz, 1H, H4), 7.95 (d, $^3J$ = 8.0 Hz, 1H, H5), 7.62 (ddd, $^3J$ = 6.9 Hz, $^3J$ = 8.5 Hz, $^4J$ = 1.4 Hz, 1H, H7), 7.57 (ddd, $^3J$ = 6.9 Hz, $^3J$ = 8.0 Hz, $^4J$ = 1.2 Hz, 1H, H6), 7.53 (dd, $^3J$ = 7.5 Hz, $^3J$ = 8.1 Hz, 1H, H3). (Attribué avec un spectre COSY)
RMN $^{13}C\{H\}$ (100 MHz, MeOD) : $\delta$ (ppm) : 140.8 (C1), 135.7 (C10), 134.1 (C4), 129.8 (C9), 129.5 (C5), 128.4 (C2), 128.1 (C7), 127.4 (C6), 127.2 (C8), 125.0 (C3), 121.5 (q, $^1J_{C-F}$ = 322 Hz, C11). (Attribué avec un spectre HSQC)
RMN $^{19}F$ (376 MHz, MeOD) : $\delta$ (ppm) : 85.4 ($CF_3$) (étalon interne $C_6F_6$)
FT-IR ($cm^{-1}$): 3473-3550 ($\nu_{N-H}$), 3053 ($\nu_{C-H}$), 1700, 1633 ($\nu_{N-H}$), 1598 (νc=c), 1508 (νc=c), 1320 ($\nu_{S=O}$), 1182 ($\nu_{S=O}$), 1116 ($\nu_{S=O}$), 1056 ($\nu_{C-F}$), 766 ($\nu_{C-H}$), 675, 624, 583, 506.
MS (ESI) : m/z : $[M-H]^-$ = 338,0, $[2(M-H)+Na]^-$ = 699,0.

1.3/ <u>Etape 3</u> - Synthèse du

N-(1-naphtalènesulfonyl)trifluorométhylsulfonamidure de lithium

Le N-(1-naphtalènesulfonyl)trifluorométhylsulfonamidure de lithium (LiNPTFSI), de formule (III) :

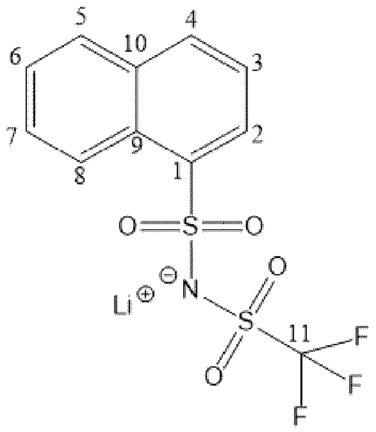
(III)

est préparé comme suit.

Dans un ballon bicol sous argon, une solution de NPTFSI (2,8 g, 8,24 mmol, 1 éq.) dans le tétrahydrofurane (THF) anhydre (10 mL) est ajoutée, au goutte à goutte et sous agitation, à une suspension d'hydrure de lithium (72,0 mg, 9,06 mmol, 1,1 éq.) dans le THF anhydre (30 mL), préalablement préparée en boite à gants et refroidie à 0°C. Une fois l'addition terminée, le milieu réactionnel est laissé revenir à température ambiante et agité pendant 19h. Le milieu réactionnel est ensuite filtré sur fritté afin d'éliminer l'excès d'hydrure de lithium, puis séché sous vide pour donner un solide blanc correspondant au LiNPTFSI (2,60 g, Rendement = 92 %).

RMN $^1H$ (400 MHz, MeOD) : $\delta$ (ppm) : 8.82 (d, $^3J$ = 8.3 Hz, 1H, H8), 8.22 (d, $^3J$ = 7.5 Hz, 1H, H2), 8.06 (d, $^3J$ = 8.2 Hz, 1H, H4), 7.95 (d, $^3J$ = 8.0 Hz, 1H, H5), 7.63 (dd, $^3J$ = 8.3 Hz, $^3J$ = 7.3 Hz, 1H, H7), 7.57 (dd, $^3J$ = 8.0 Hz, $^3J$ = 7.3 Hz, 1H, H6), 7.53 (dd, $^3J$ = 8.2 Hz, $^3J$ = 7.5 Hz, 1H, H3).
RMN $^{13}C\{H\}$ (100 MHz, MeOD) : $\delta$ (ppm) : 140.8 (C1), 135.7 (C10), 134.1 (C4), 129.8 (C9), 129.5 (C5), 128.4 (C2), 128.1 (C7), 127.4 (C6), 127.2 (C8), 125.0 (C3), 121.5 (q, $^1J_{C-F}$ = 322 Hz, C11)
RMN $^{19}F$ (376 MHz, MeOD) : $\delta$ (ppm) : 85.5 ($CF_3$) (étalon interne $C_6F_6$)
FT-IR ($cm^{-1}$): 3053 ($\nu_{C-H}$), 1598 (νc=c), 1508 (νc=c), 1308 ($\nu_{S=O}$), 1186 ($\nu_{S=O}$), 1123 ($\nu_{S=O}$), 1068 ($\nu_{C-F}$), 767 ($\nu_{C-H}$), 627, 582, 509.

2/ <u>Exemple 2</u> - Synthèse du polymère

Le poly(carbonate de triméthylène) (PTMC) acétylé est préparé selon les 2 étapes suivantes.

2.1/ Synthèse du PTMC

Le PTMC, de formule :

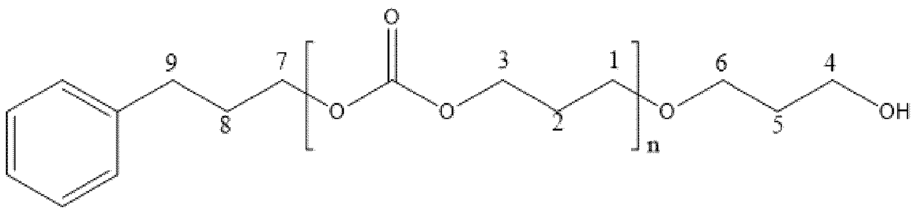

dans laquelle n est de préférence compris entre 10 et 100, est préparé comme suit.

Dans un ballon bicol sont ajoutés sous argon, du carbonate de triméthylène (25 g, 0,245 mol, 24,5 éq.), du dichlorométhane anhydre (80 mL), ainsi que du 3-phényl-1-propanol (1,3 mL, 0,010 mol, 1 éq.). Une solution de phosphate de diphényle (1,96 g, 0,008 mol, 0,8 éq.) dans le dichlorométhane (20 mL) est ajouté au milieu réactionnel sous agitation. Après 48h à température ambiante, le milieu réactionnel est neutralisé avec de la triéthylamine (1,4 mL, 0,010 mol, 1 éq.). Le milieu réactionnel est concentré sous vide et le produit obtenu est précipité dans le méthanol froid et séché sous vide à 60°C pour donner du PTMC (26,3 g, 2800 g/mol, Rendement = 98 %).

Le spectre RMN$^1$H du polymère obtenu est montré sur la figure 1.

RMN $^1$H (400 MHz, $CDCl_3$) : $\delta$ (ppm) : 1.91 (q, 4H, H5, H8), 2.05 (q, 50H, H2), 2.71 (t, 2H, H9), 3.73 (t, 2H, H4), 4.15 (t, 2H, H7), 4.24 (t, 100H, H1, H3), 4.29 (t, 2H, H6), 7.18-7.30 (m, 5H, $H_{Ar}$).

2.2/ Acétylation du PTMC

Le PTMC acétylé, de formule (IIc') :

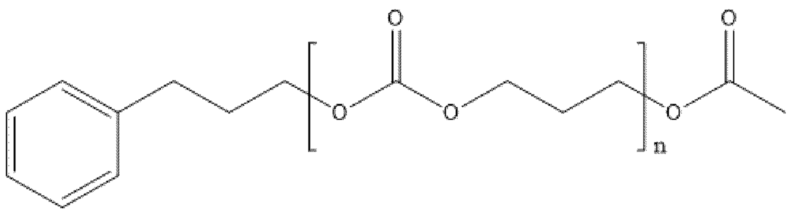

(IIc')

est préparé comme suit.

Dans un ballon bicol sous argon, du chlorure d'acétyle (1,3 mL, 17,7 mmol, 5 éq.) est ajouté, au goutte à goutte, à une solution de PTMC (10 g, 3,53 mmol, 1 éq.) et de triéthylamine (2,5 mL, 17,7 mmol, 5 éq.) dans du dichlorométhane (40 mL). Après 18h de réaction, le produit est précipité dans le méthanol froid et séché sous vide pour donner du PTMC acétylé (9,52 g, Rendement = 94 %), de masse molaire moyenne en nombre 2900 g/mol.

Le spectre RMN$^1$H du polymère obtenu est montré sur la figure 2.

3/ Exemple 3 - Compositions des électrolytes polymères

3.1/ Préparation des électrolytes polymères

a/ Electrolyte polymère PTMC / LiNPTFSI

L'électrolyte polymère PTMC / LiNPTFSI conforme à l'invention est préparé comme suit.

En boite à gants, sont introduits successivement dans un flacon, du PTMC (2900 g.mol$^{-1}$, 1,50 g, 0,52 mmol, 1 éq.), du LiNPTFSI (0,318 g, 0,92 mmol, 1,76 éq.) ainsi que du THF anhydre (5 mL). Le mélange est placé sous agitation à 50°C pendant 15H. L'acétonitrile est ensuite évaporé et l'électrolyte est séché à 80°C sous vide pendant 96H. L'électrolyte est stocké en boite à gants.

Il présente un ratio molaire [Li]/[$CO_3$] = 1/15.

b/ Electrolyte polymère PTMC / LiTFSI

L'électrolyte PTMC / LiTFSI (exemple comparatif) est préparé comme suit.

En boite à gants, sont introduits successivement dans un flacon, du PTMC acétylé (2900 $g.mol^{-1}$, 1,50 g, 0,52 mmol, 1 éq.), du LiTFSI (0,264 g, 0,92 mmol, 1,76 éq.) ainsi que du THF anhydre (5 mL). Le mélange est placé sous agitation à 50°C pendant 15H. Le THF est ensuite évaporé et l'électrolyte est séché à 80°C sous vide pendant 96H. L'électrolyte est stocké en boite à gants.

Il présente un ratio molaire $[Li]/[CO_3] = 1/15$.

3.2/ Analyse par calorimétrie différentielle à balayage

Les électrolytes polymères sont analysés par calorimétrie différentielle à balayage (DSC).

Les courbes obtenues sont montrées sur la figure 3. On en déduit les valeurs de température de transition vitreuse suivantes :

- PTMC / LiNPTFSI : $T_g$ = - 20,7°C,
- PTMC / LiTFSI : Tg = - 14,5°C.

3.3/ Mesure de la conductivité

Les électrolytes polymères préparés ci-avant sont insérés dans des piles bouton, sous forme de cellules symétriques à électrodes bloquantes en acier inoxydable, au sein desquelles ils forment un électrolyte solide. Ils y sont placés sous forme d'un film mince au centre d'une rondelle en polyéthylène de diamètre externe 16 mm et diamètre interne 10 mm, l'ensemble étant maintenu en pression entre les deux électrodes en forme de disque en acier inoxydable.

Les piles boutons sont ensuite placées dans une étuve à 80°C. Après 3H d'équilibre, des mesures de spectroscopie d'impédance électrochimique (EIS) sont réalisées sur un potentiostat BioLogic VMP-300, entre 80°C et 10°C, températures par palier décroissant de 10°C (stabilisation de 2H à chaque palier). Pour chaque électrolyte, trois piles bouton sont réalisées.

La conductivité de l'électrolyte est calculée avec l'Equation (1) :

$$\sigma = \frac{e}{S \times R_2} \quad (1)$$

dans laquelle : $\sigma$ est la conductivité de l'électrolyte (S/cm), e est l'épaisseur de l'électrolyte (cm), S est la surface de l'électrolyte ($cm^2$) et $R_2$ est la résistance de l'électrolyte ($\Omega$),
après ajustement des données avec le circuit équivalent présenté sur la figure 4. Sur cette figure, le bloc 11 représente la résistance des câbles et du support de pile (« R1 »), le bloc 12 représente la contribution de la conductivité ionique du matériau (« R2 ») et l'élément 13, monté en parallèle avec R2, représente l'élément à phase constante ou CPE, pour l'anglais « Constant Phase Element » (« Q2 »).

Les résultats obtenus sont montrés sur la figure 5. On observe que les performances de l'électrolyte polymère de PTMC - LiNPTFSI selon l'invention sont supérieures à celle de l'électrolyte polymère PTMC - LiTFSI. En effet, la conductivité mesurée au cours de cette étude est, à 80°C, de $1,9.10^{-2}$ $mS.cm^{-1}$ pour le système d'électrolyte polymère PTMC-LiNPTFSI, alors que celle du système PTMC-LiTFSI est de $6,3.10^{-3}$ $mS.cm^{-1}$. Ainsi, la conductivité du système PTMC - LiNPTFSI est en moyenne plus de 3 fois supérieure à la conductivité du système PTMC-LiTFSI, mettant en évidence une synergie entre le PTMC et le LiNPTFSI.

## Revendications

1. Electrolyte comprenant un sel de lithium et un polymère comportant un motif de répétition de formule (I) :

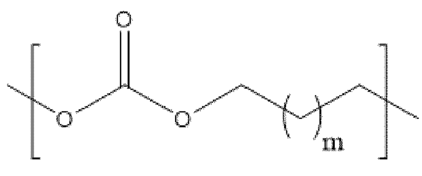

(I)

dans laquelle m est égal à 0, 1 ou 2,
**caractérisé en ce que** ledit sel de lithium présente la formule (III) :

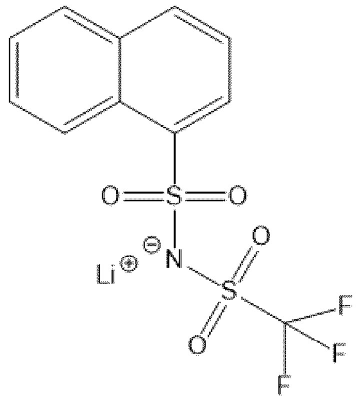

(III).

2. Electrolyte selon la revendication 1, dans lequel le ratio molaire « sel de lithium / groupements carbonate du polymère » [Li]/[$CO_3$] est compris entre 1/2 et 1/40.

3. Electrolyte selon la revendication 1 ou 2, dans lequel ledit polymère présente la formule générale (II) :

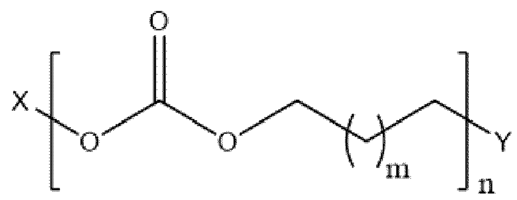

(II)

dans laquelle

n est un nombre entier supérieur ou égal à 10,
m est égal à 0, 1 ou 2,
et X et Y, identiques ou différents, représentent chacun un groupement dépourvu de fonction hydroxyle libre choisi parmi les alkylaryles, optionnellement substitués, et les alcanoates.

4. Electrolyte selon la revendication 3, dans lequel ledit polymère répond à la formule générale (IIa) :

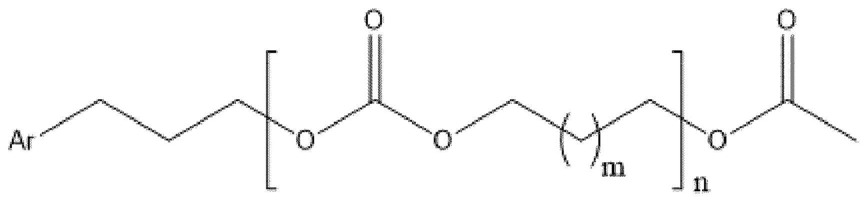

(IIa)

dans laquelle

n est un nombre entier supérieur ou égal à 10,
m est égal à 0, 1 ou 2,
et Ar représente un groupement aryle optionnellement substitué.

5. Electrolyte selon l'une quelconque des revendications 1 à 4, dans lequel ledit polymère présente une masse molaire moyenne en nombre comprise entre 1 000 g/mol et 10 000 g/mol.

**6.** Electrolyte selon l'une quelconque des revendications 1 à 5, sous forme solide.

**7.** Procédé de préparation d'un électrolyte selon l'une quelconque des revendications 1 à 6, comprenant une étape de mélange dudit polymère et dudit sel de lithium.

**8.** Utilisation d'un électrolyte selon l'une quelconque des revendications 1 à 6 dans une cellule électrochimique pour batterie au lithium.

**9.** Cellule électrochimique pour batterie au lithium comprenant une électrode positive, une électrode négative et un électrolyte solide, **caractérisée en ce que** ledit électrolyte est un électrolyte selon la revendication 6.

**10.** Batterie au lithium comprenant au moins une cellule électrochimique selon la revendication 9.

Europäisches Patentamt
European Patent Office
Office européen des brevets

# RAPPORT DE RECHERCHE EUROPEENNE

Numéro de la demande
EP 25 17 3960

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 4 011 946 A1 (COMMISSARIAT ENERGIE ATOMIQUE [FR]; ACCUMULATEURS FIXES [FR]) 15 juin 2022 (2022-06-15) * revendications 9,11,17; exemples * ----- | 1-10 | INV. H01M10/0525 H01M10/0565 |
| A | EP 4 011 947 A1 (COMMISSARIAT ENERGIE ATOMIQUE [FR]; ACCUMULATEURS FIXES [FR]) 15 juin 2022 (2022-06-15) * revendications 10,11,17; exemples * ----- | 1-10 | |
| A | FR 3 130 454 A1 (COMMISSARIAT ENERGIE ATOMIQUE [FR]; ACCUMULATEURS FIXES [FR]) 16 juin 2023 (2023-06-16) * revendications 1,5,8,9; exemples * ----- | 1-10 | |
| A | FR 3 085 378 A1 (ARKEMA FRANCE [FR]; SCE FRANCE [FR]) 6 mars 2020 (2020-03-06) * revendication 57 * ----- | 1-10 | |

DOMAINES TECHNIQUES RECHERCHES (IPC)

H01M

Le présent rapport a été établi pour toutes les revendications

1

| Lieu de la recherche | Date d'achèvement de la recherche | Examinateur |
|---|---|---|
| Munich | 26 août 2025 | Duval, Monica |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 25 17 3960

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-08-2025

| Document brevet cité au rapport de recherche | Date de publication | Membre(s) de la famille de brevet(s) | Date de publication |
|---|---|---|---|
| EP 4011946 A1 | 15-06-2022 | EP 4011946 A1 | 15-06-2022 |
| | | FR 3117489 A1 | 17-06-2022 |
| EP 4011947 A1 | 15-06-2022 | EP 4011947 A1 | 15-06-2022 |
| | | FR 3117490 A1 | 17-06-2022 |
| FR 3130454 A1 | 16-06-2023 | AUCUN | |
| FR 3085378 A1 | 06-03-2020 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 3130454


### Littérature non-brevet citée dans la description


- **LADOUCEUR et al.** *Journal of Power Sources*, 2015, vol. 293, 78-88
- **GREENE**. Protective groups in Organic Synthesis. Wiley & Sons, 2006